# EUROPEAN PATENT SPECIFICATION

(11) **EP 1 279 560 B1**
(45) Date of publication and mention of the grant of the patent: **23.06.2010**
(21) Application number: 02014142.0
(22) Date of filing: 25.06.2002
(51) Int. Cl.: B60R 16/02, B60R 25/10

(54) **Communication and interface system between an antitheftdevice and an acoustic signaller for motor vehicles**
Kommunikationssystem und Schnittstelle zwischen Diebstahlschutzeinheit und einer akustischen Warnanlage für ein Fahrzeug
Système de communication et interface entre un système antivol et un avertisseur sonore pour véhicules automobiles

(30) Priority: 24.07.2001 IT RE20010027
(43) Date of publication of application: 29.01.2003
(73) Proprietor: Meta System S.p.A., 42124 Reggio Emilia (IT)
(72) Inventor: Simonazzi, Giuseppe, 42100 Reggio Emilia (IT)
(74) Representative: Feltrinelli, Secondo Andrea

(56) References cited:
- US-A- 5 539 388

## Description

The present invention refers to a communication and interface system between than antitheft controller for motor vehicles and an acoustic signaller.

It is known that one of the problems the technicians in charge of the installation of alarm systems on motor vehicles have to face is the layout and the passage of connection cables between the antitheft controller placed in the interior compartment and the alarm siren installed in the motor bonnet and the one of the specific cable that, from the button detecting the opening of the bonnet sends the event to the controller itself.

The passage of said wires is quite difficult, particularly in modem motor vehicles wherein the installation of acoustic insulation panels between the engine and the internal compartment has become very common.

Further on it is mentioned patent US 5,539,388 disclosing a telemetry and control system, for use in automobiles and other vehicles for antitheft purposes, in which encoded data are transmitted in the form of a train of current pulses through the existing direct current power wiring.

However even this known system, when used and installed in a vehicle as anti theft device, would require to have improved performances and capacity of cooperating with other parts of the vehicle, in particular the existing standard acoustic signaller installed on it.

Object of the present invention is to remove the above-mentioned drawback.

More particularly, object of the present invention is to find a system allowing an easy, smooth passage and layout of connection cables between an antitheft controller, the alarm siren arid the button detecting the opening of a motor vehicle bonnet.

Now, it has been found out that these and other objects which will result from the following description are obtained by a communication and interface system between the antitheft controller for motor vehicles and a corresponding acoustic alarm signaller wherein, instead of specific wires, wires that are normally installed on motor vehicles, particularly the specific one for the horn operation, are used.

The advantages obtained by the system according to the present invention essentially lie in the fact that:
- the horn cable is free as it is never used when the motor vehicles are stationary;
- the negative impedance on the horn wire is higher than the one present on wires of other uses (such as the ones of the blinkers) so that the signals transmitted to the controller are decidedly less attenuated;
- the horn conductor line is totally inside the motor vehicles, therefore it is protected by possible switching off attempts of the outside alarm devices;
- the system can be configured in such a way to simultaneously or alternatively operate at will the horn and the siren in case of alarm.

The construction and functional features of the communication and interface system of the present invention will be better understood by the following detailed description wherein reference is made to the figure of the enclosed drawing showing a wiring diagram according to a preferred embodiment, which is given by way of illustrative but non-limitative example.

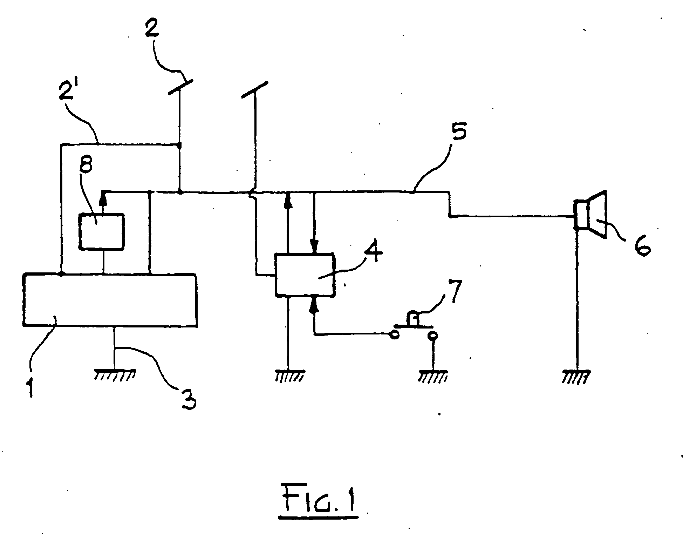

With reference to figure 1, the alarm controller 1 is normally powered by the voltage of a battery 2 through a specific wire 2' for the positive pole, while the negative one is directly connected to the body of the motor vehicle. In the same way, the signalling alarm siren 4 can be also powered.

The power through the specific wire 2', instead of the same wire of the positive pole 2 of the battery, has been adopted not to put on the latter undesired signals that could disturb other apparatuses connected to it.

The negative pole 3 is common to all the devices.

The button 7, which detects the opening of the motor bonnet, is connected to the circuit of the siren 4 so that the latter rings and sends a suitable coded alarm signal to the controller 1, through the same cable 5 connecting the acoustic signaller 6 to the positive pole of the battery.

The cable 5 itself is connected to the controller 1, on the cable 5 of the acoustic signaller 6 a coded signal that is sent by the controller 1 at regular intervals is always present. The siren 4 waits to receive such signal; if, for any reason such as cable cut or short circuit, the signal should not reach the siren 4, the automatic starting of an alarm cycle is obtained. The alarm can be also activated by the controller 1 through another code that is always sent through the cable 5 of the acoustic signaller 6; other different codes sent by the controller 1 inform whether the siren 4 and/or the acoustic signaller 6 are on or off.

In order to input said signals on the cable 5 an integrated circuit 8 of the kind adopted in infrared remote controls is used.

In this way a complete connection between the controller 1, the button 7 and the siren 4 has been carried out wherein only the cable 5 of the acoustic signaller 6 has been used as communication path thus avoiding the use and the passage of additional wires between the interior and the engine compartments of the motor vehicles.

Even though the present invention has been described and illustrated according to an embodiment given as an illustrative and non-limitative example, it will be clear for the technicians skilled in the art that it is possible to make different changes and variations to the circuit, to the components and to the combinations according to the above-mentioned description.

Therefore, it is clear that the present invention includes all changes and variations falling within the protective scope of the following claims.

## Claims

1. A communication and interface system between an antitheft controller (1) for motor vehicles and a corresponding acoustic alarm signaller (4), comprising a wire for the sending of a coded signal between said antitheft controller (1) and said acoustic alarm signaller (4), and whereby no additional wires are used between the interior of the motor vehicle and the engine compartment of the motor vehicle for interlacing said antithetic controller (1) and said acoustic alarm signaller (4) placed respectively in said interior and in said engine compartment of the motor vehicle, **characterized in that** said wire is the specific one (5) which is installed and already existing on a motor vehicle for the connection of its acoustic signaller (6) to the positive pole (2) of the vehicle's battery, and **in that** said specific wire (5) is even used in order to connect to said antitheft controller (1) a button (7) detecting the opening of the vehicle's motor bonnet and in order to send an opening signal of the vehicle's bonnet to the antitheft controller (1).

2. A communication and interface system according to any of the preceding claims, **characterised in that** it is configured in such a way to simultaneously or alternatively operate at will said acoustic alarm signaller (4) and the motor vehicle's acoustic signaller (6) in case of alarm.

3. A communication and interface system according to claim 1, **characterised in that** a specific wire (2') is provided for powering said antitheft controller (1) by the positive pole (2) of the vehicle's battery.

4. A communication and interface system according to the preceding claims, **characterised in that** on said specific wire (5) a coded signal sent by the anti theft controller (1) at regular intervals is always present, whereby when for any reason the coded signal does not reach said acoustic alarm signaller (4) an alarm cycle is activated.

5. A communication and interface system according to the preceding claims, **characterised in that** different codes are sent by the anti theft controller (1) through said specific wire (5), said different codes corresponding to the status, on or off, of the acoustic alarm signaller (4) and/or the vehicle's acoustic signaller (6).

## Patentansprüche

1. Kommunikation- und Schnittstellensystem zwischen einer Diebstahlsicherungs-Steuereinheit (1) für Kraftfahrzeuge und einem entsprechenden Signalgeber (4) für akustischen Alarm,
das einen Draht umfasst, um ein codiertes Signal zwischen der Diebstahlsicherungs-Steuereinheit (1) und dem Signalgeber (4) für akustischen Alarm zu senden, und
wobei keine weiteren Drähte zwischen dem Innenraum des Kraftfahrzeugs und dem Motorraum des Kraftfahrzeugs verwendet werden, um eine Schnittstelle zwischen der Diebstahlsicherungs-Steuereinheit (1) und dem Signalgeber (4) für akustischen Alarm, die im Innenraum bzw. im Motorraum des Kraftfahrzeugs angeordnet sind, zu bildern,
**dadurch gekennzeichnet, dass** der Draht ein bestimmter Draht (5) ist, der in einem bereits vorhandenen Kraftfahrzeug installiert ist, um dessen akustischen Signalgeber (6) mit dem positiven Pol (2) der Fahrzeugbatterie zu verbinden, und
dass der bestimmte Draht (5) sogar verwendet wird, um mit der Diebstahlsicherungs-Steuereinheit (1) einen Schalter (7) zu verbinden, der das Öffnen der FahrzeugMotorhaube erfasst, und um ein Signal des Öffnens der Fahrzeugmotorhaube zu der Diebstahlsicherungs-Steuereinheit (1) zu senden.

2. Kommunikations- und Schnittstellensystem nach einem der vorhergehenden Ansprüche, **dadurch gekennzeichnet, dass** es in der Weise konfiguriert ist, dass es bei einem Alarm gleichzeitig oder abwechselnd nach Belieben den Signalgeber (4) für akustischen Alarm und den akustischen Signalgeber (6) des Kraftfahrzeugs betätigt.

3. Kommunikations- und Schnittstellensystem nach Anspruch 1, **dadurch gekennzeichnet, dass** ein bestimmter Draht (2') vorgesehen ist, um die Diebstahlsicherungs-Steuereinheit (1) durch den positiven Pol (2) der Fahrzeugbatterie mit Leistung zu versorgen.

4. Kommunikations- und Schnittstellensystem nach den vorhergehenden Ansprüchen, **dadurch gekennzeichnet, dass** auf dem bestimmten Draht (5) stets ein von der Diebstahlsicherungs-Steuereinheit (1) in regelmäßigen Intervallen gesendetes codiertes Signal anliegt, wodurch dann, wenn das codierte Signal aus irgendeinem Grund den Signalgeber (4) für akustischen Alarm nicht erreicht, ein Alarmzyklus ausgelöst wird.

5. Kommunikations- und Schnittstellensystem nach den vorhergehenden Ansprüchen, **dadurch gekennzeichnet, dass** verschiedene Codes von der Diebstahlsicherungs-Steuereinheit (1) über den bestimmten Draht (5) gesendet werden, wobei die verschiedenen Codes dem Status, nämlich Ein oder Aus, des Signalgebers (4) für akustischen Alarm und/oder des akustischen Signalgebers (6) des Fahrzeugs entsprechen.

## Revendications

1. Système de communication et d'interface entre une unité de contrôle d'antivol (1) pour véhicules automobiles et un correspondant avertisseur sonore d'alarme (4),
comprenant un câble pour envoyer un signal codifié entre ladite unité de contrôle d'antivol (1) et ledit avertisseur sonore d'alarme (4), et qui n'utilise pas de câbles supplémentaires entre l'intérieur du véhicule automobile et le compartiment du moteur pour interfacer ladite unité de contrôlé d'antivol (1) et ledit avertisseur sonore d'alarme (4) placés respectivement dans ledit intérieur et dans ledit compartiment du moteur du véhicule automobile,
***caractérisé en ce que*** ledit câble est le câble spécifique (5) qui est installé et déjà existant dans un véhicule automobile pour la connexion de son avertisseur sonore (6) au pôle positif (2) de la batterie du véhicule, et
***en ce que*** ledit câble spécifique (5) est utilisé aussi pour connecter à ladite unité de contrôle d'antivol (1) un bouton (7) qui détecte l'ouverture du capot du véhicule automobile est pour envoyer un signal d'ouverture du capot du véhicule automobile à l'unité de contrôle d'antivol (1).

2. Système de communication et d'interface selon l'une ou plusieurs des revendications précédentes, ***caractérisé en ce qu*'**il est configuré de façon que ledit avertisseur sonore d'alarme (4) et l'avertisseur sonore (6) du véhicule automobile puissent fonctionner selon le choix simultanément ou alternativement en cas d'alarme.

3. Système de communication et d'interface selon la revendication 1, ***caractérisé en ce qu*'**un un câble spécifique (2') est pourvu pour l'alimentation électrique de ladite unité de contrôle d'antivol (1) par le pôle positif (2) de la batterie du véhicule.

4. Système de communication et d'interface selon les revendications précédentes, ***caractérisé en ce qu*'**un signal codifié envoyé à intervalles réguliers par l'unité de contrôle d'antivol (1) est toujours présent sur ledit câble spécifique (5), par lequel si pour quelque raison le signal codifié ne parvient pas audit avertisseur sonore d'alarme (4), un cycle d'alarme est activé.

5. Système de communication et d'interface selon les revendications précédentes, ***caractérisé en ce que*** des codes différents sont envoyés par l'unité de contrôle d'antivol (1) à travers ledit câble spécifique (5), lesdits codes différents correspondants à l'état, allumé ou éteint, dudit avertisseur sonore d'alarme (4) et/ou dudit avertisseur sonore (6).
